# EUROPEAN PATENT SPECIFICATION

(11) **EP 3 260 748 B1**
(45) Date of publication and mention of the grant of the patent: **29.05.2019**
(21) Application number: 17177205.6
(22) Date of filing: 21.06.2017
(51) Int. Cl.: F16K 15/14, F16K 17/18

(54) **VALVE ASSEMBLY**
VENTILANORDNUNG
ENSEMBLE SOUPAPE

(30) Priority: 23.06.2016 IT UA20164632
(43) Date of publication of application: 27.12.2017
(73) Proprietor: MGF S.r.l., 20081 Abbiategrasso (MI) (IT)
(72) Inventor: REPACI, Massimo, 20081 Abbiategrasso (Milano) (IT)
(74) Representative: Feltrinelli, Secondo Andrea

(56) References cited:
- EP-A1- 1 975 482
- GB-A- 2 018 951
- US-A- 2 249 480
- US-A- 3 831 626

## Description

### TECHNICAL FIELD OF THE INVENTION

The present invention regards a valve assembly usable in a compression unit for a reciprocating compressor adapted to compress a working fluid.

More in detail, the present invention regards a valve assembly adapted to control the intake and delivery of a working fluid in a compressor of reciprocating type lacking lubrication.

### STATE OF THE ART

Volumetric compressors lacking lubrication - or dry - are known, comprising at least one compression unit, of reciprocating type, provided with at least one cylinder within which a piston is driven with reciprocating motion, moving closer to or away from a closure head of the cylinder. The head comprises intake and delivery chambers for the passage of the working fluid respectively through an intake duct and a delivery duct, and a plate provided with valves adapted to control the flow of such fluid during intake and delivery. The cylinder and the relative head are mutually and sealingly connected.

The plate comprises at least one laminar elastic intake valve and one laminar elastic delivery valve which control the intake and delivery of the fluid with which the compressor works, for example air, entering or exiting with respect to the cylinder.

The reciprocating motion of the piston activates a cycle of intake and compression of the working fluid within the cylinder. In detail, the piston, by moving away from the head, causes the lowering of the pressure in the volume of the cylinder with respect to the pressure present in the intake duct, to the point that the pressure difference causes the deformation of the intake valve. The intake valve, being opened, allows the introduction of the working fluid in the cylinder. The intake valve remains open while the pressure within the cylinder is lower than the pressure of the intake duct and it is closed when the pressure in the intake duct is equal to or lower than the internal pressure of the cylinder. The opening or closing driving of the intake valve, therefore, is controlled by a pressure difference without requiring the aid of any further control member.

Analogously, the delivery valve is a laminar elastic valve that selectively places the cylinder in fluid communication with the delivery duct. The operation of the delivery valve is the same as that described for the intake valve except for the fact that the opening of the delivery valve is determined by a pressure increase of within the cylinder with respect to the pressure present in the delivery duct.

In practice, following the approach of the piston relative to the compression head, the working fluid comprised in the internal volume of the cylinder, delimited between the plate and the piston, is compressed, thus increasing the pressure within the cylinder. The increase of pressure, as stated, causes the opening of the delivery valve, allowing the outflow of the compressed fluid which is then conveyed towards a delivery line for the subsequent use thereof.

The performances of one such compressor depend on the shape of the compression unit, or of the compression units if more than one is present, and in particular on the internal cubature of the cylinder (which varies as a function of the stroke and bore parameters) as well as on the characteristics of the delivery and intake valves.

One drawback of such compressor is represented by the high operating noise, to which the above-described valve assembly contributes, which can limit the use thereof in residential or semi-residential areas, or generally in places where the noise levels are regulated.

In order to overcome such drawback, solutions have been developed which provide for the use of an external casing within which the compressor is to be arranged. The casing has acoustically-isolated walls adapted to limit the sound level that is transmitted through the same.

Such solution nevertheless increases the bulk of the compressor and the relative manufacturing costs, and also makes it difficult to access the single components of the compressor unit if maintenance thereof must be executed.

A further solution employed in the field of reciprocating compressors, for the purpose of reducing the noise level, lies in limiting the performances of the compressor, with reference to the air volume that can be dispensed per unit of time. In practice, once the maximum tolerable sound level is known, the performances of the compressor are limited, for example by limiting the travel of the piston, so as to not exceed the maximum pre-established sound value.

Such solution nevertheless does not allow fully exploiting the performances of a compressor, and hence negatively affects the results.

The documents US 2,249,480 and GB 2018951 describe compression units comprising valve assemblies associated with a valve plate, for controlling the intake and the delivery.

There is therefore the need to provide for a dry reciprocating compressor characterized by reduced use noise, yet in the scope of a solution with high performances and manufacturing costs comparable to those of the solutions of known type.

### OBJECTS OF THE INVENTION

Hence, the main object of the present invention is to improve the state of the art relative to a valve assembly for a dry reciprocating compressor.

In the scope of such task, one object of the present invention is to provide a valve assembly for a reciprocating compressor characterized by reduced operating noise with respect to the solutions of known type, in the scope of a solution capable of ensuring greater acoustical comfort.

Another object of the present invention is to provide a valve assembly with reduced operating noise in the scope of a solution with high performances with reference to the flow rate of compressed working fluid dispensable per unit of time.

A further object of the present invention is to provide a valve assembly that is simple to use and easy to implement in a dry reciprocating compressor of known type, in substitution of a previously-used valve assembly, for the purpose of reducing the operating noise of such compressor while ensuring high performances thereof.

According to one aspect of the present invention, a valve assembly for a reciprocating compressor is provided according to claim 1.

According to a further aspect of the present invention, a compression unit is provided for a dry reciprocating compressor comprising the aforesaid valve assembly according to claim 10.

The dependent claims refer to preferred and advantageous embodiments of the invention.

### BRIEF DESCRIPTION OF THE DRAWINGS

Further characteristics and advantages of the present invention will be clearer from the detailed description of a preferred, non-exclusive embodiment of a valve assembly for a reciprocating compressor, illustrated by way of a non-limiting example in the enclosed drawing tables, in which:
figure 1 is an exploded perspective view of a valve assembly according to the present invention;
figure 2 is a section view along the trace II-II of a valve assembly according to the present invention;
figure 3 is section view of a detail of a component of the valve assembly according to the present invention illustrated in a rest configuration and in a use configuration;
figure 4 is a top perspective view of a valve assembly according to the present invention;
figure 5 is a bottom view of the valve assembly pursuant to figure 4;
figure 6 is an exploded perspective view of a compression unit comprising a valve assembly according to the present invention.

### EMBODIMENTS OF THE INVENTION

With reference to the enclosed figures, a valve assembly usable in a compressor of reciprocating type is indicated overall with reference number 1.

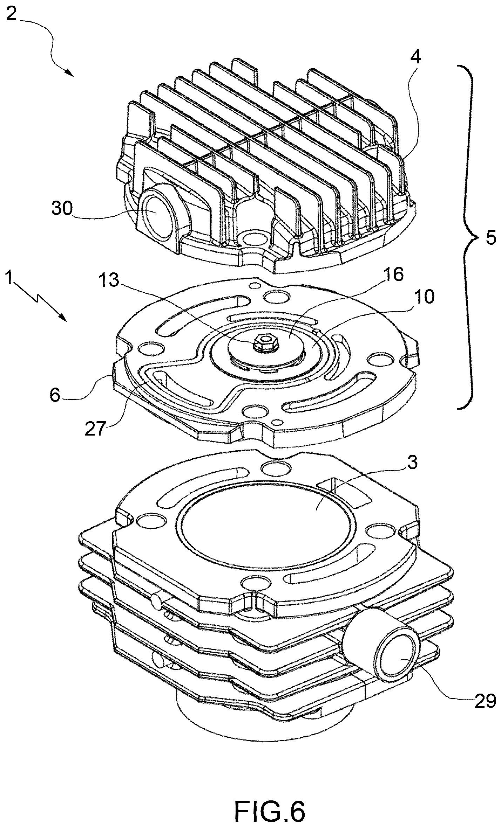

The valve assembly 1, as better described hereinbelow, is shaped in order to be used in a reciprocating compressor of the type lacking lubrication - or dry type. One such compressor, which is not illustrated in the enclosed figures, comprises at least one unit or compression unit 2 provided with at least one cylinder 3, lacking lubrication, at whose interior a piston slides with reciprocating motion with respect to a closure head 4 of the cylinder 3 (figure 6). The actuation of the piston occurs by means of a drive shaft rotated by a motor unit around a rotation axis. The drive shaft is connected to the piston through a connection of connecting rod-crank type, such that following the rotation of the drive shaft, the reciprocating travel of the piston in the cylinder is determined.

The reciprocating movement of the piston with respect to the cylinder 3, together with the action of the valve assembly 1, determines the cycle of intake and compression of the working fluid of the compressor.

The working fluid referred to hereinbelow is air.

A compressor unit comprising a cylinder 3 and a closure head 4 of the cylinder 3 is another object of the present invention. For such purpose, it is indicated that the closure head 4 comprises the valve assembly 1 and a cap 5 to be sealingly constrained at the upper part to the valve assembly 1 (see figure 6), and to the cylinder 3, by means of bolts or similar connecting means.

According to one aspect of the present invention, the cap 5 accomplishes the task of guiding the entrance of the air to be compressed (intake) and the exit of the compressed air (delivery) with respect to the interior of the cylinder 3.

For such purpose, the cap 5 comprises at least one intake chamber, not illustrated in detail in the enclosed figures, into which the air which is suctioned from the outside is guided, in order then to be inserted within the cylinder 3 through the valve assembly 1, and at least one delivery chamber into which the compressed air is guided which exits from the cylinder 3 through the valve assembly 1, with opposite direction with respect to that of the suctioned air.

In the enclosed figures, the compression unit 2 comprises a single cylinder 3. It is intended that the compression unit 2 can comprise more than one cylinder 3. In such case, the valve assembly 1 is configured for controlling the introduction and expulsion of the working fluid through the single cylinders 3.

The valve assembly 1 is configured for automatically controlling the flow of the working fluid that enters or exits with respect to the cylinder 3.

For such purpose, the valve assembly 1 according to the present invention comprises a plate 6 provided with at least one intake opening 7, which extends passing through the plate 6, and with at least one delivery opening 8, which extends passing through the plate 6.

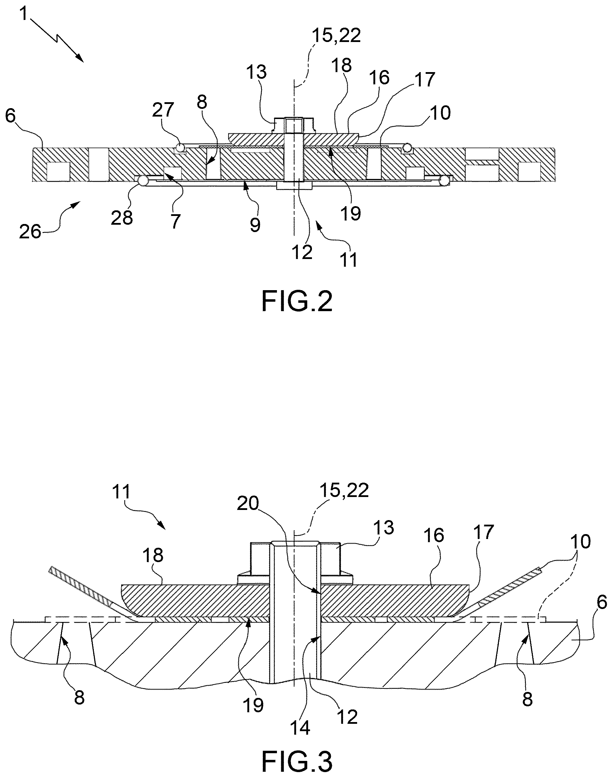

It is observed that in the section view of figure 2, the at least one intake opening 7 is illustrated blind, this deriving from the position of the section plane II-II.

The at least one intake through opening 7 defines, through the plate 6, an intake duct for the passage of the working fluid which is suctioned from the outside. Analogously, the at least one delivery through opening 8 defines, through the plate 6, at least one duct for the passage of the compressed working fluid.

The at least one intake through opening 7 is occluded by a laminar elastic intake valve 9 operatively associated with the lower portion of the plate 6.

The laminar elastic intake valve 9, also indicated hereinbelow as intake valve 9, is set to control the flow of working fluid which is drawn from outside. In particular, the intake valve 9 can assume a first work configuration, or non-deformed configuration, in which it is placed in abutment against the plate 6 to hermetically occlude the at least one intake through opening 7, and a second work position, or deformed configuration, moving away from the plate 6, in which it delimits at least one passage opening for the working fluid through the at least one intake through opening 7.

The at least one delivery through opening 8 is instead occluded by a laminar elastic delivery valve 10, operatively associated with the upper portion of the plate 6.

The laminar elastic delivery valve 10, hereinbelow also indicated as delivery valve 10, is set to control the flow of the compressed working fluid. In particular, the delivery valve 10 can assume a first work configuration, or non-deformed configuration, in which it is placed in abutment against the plate 6 to hermetically occlude the at least one delivery through opening 8 and a second work position, or deformed configuration, moving away from the plate 6, in which it delimits at least one passage opening for the compressed working fluid through the at least one delivery through opening 8 (see figure 3).

The intake valve 9 and the delivery valve 10 are configured as circular laminar bodies, elastically deformable, of limited thickness.

As better described hereinbelow, the deformation of the intake valve 9 and of the delivery valve 10 occur following the pressure difference that is established between the opposite sides of each valve 9, 10.

The valve assembly 1 comprises means 11 for connecting the at least one intake valve 9 and the at least one delivery valve 10 to the plate 6.

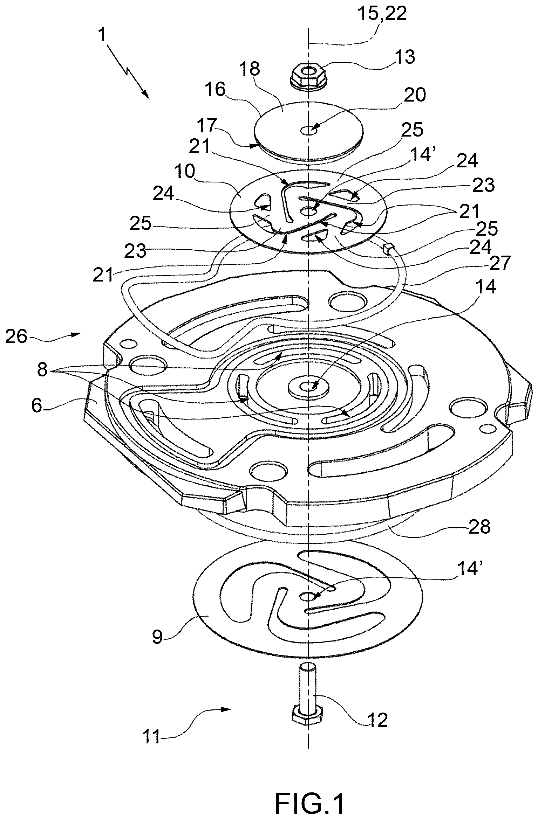

According to one version of the present invention, the connecting means 11 comprise at least one screw 12 and a relative nut 13 adapted to clamp the at least one intake valve 9 and the at least one delivery valve 10 to the plate 6, on opposite sides (see figures 1 and 2).

For such purpose, the plate 6 has a central through opening 14, engageable with the screw 12 and, analogously, the intake valve 9 and the delivery valve 10 have a through hole 14' engageable with the screw 12.

According to such version, the at least one intake valve 9 and the at least one delivery valve 10 are substantially concentric and aligned with each other, at opposite sides of the plate 6, with respect to a central axis 15.

According to one aspect of the present invention, the valve assembly 1 comprises at least one abutment element 16, associated above the delivery valve 10, adapted to limit and control the deformation of the delivery valve 10 itself, during use. More in detail, the abutment element 16 is associated against the face of the delivery valve 10 opposite that which is in abutment against the plate 6 and which occludes the at least one delivery opening 8.

In practice, the abutment element 16 prevents the deformation of the central portion of the at least one delivery valve 10 against which it is placed in abutment and controls the deformation, limiting it, of the external portion of the delivery valve 10 moving away from the plate 6.

According to one version of the present invention, the abutment element 16 is shaped as a discoidal element.

The abutment element 16 has a side surface 17 joining between an upper surface 18 and a lower surface 19 that are flat or substantially flat.

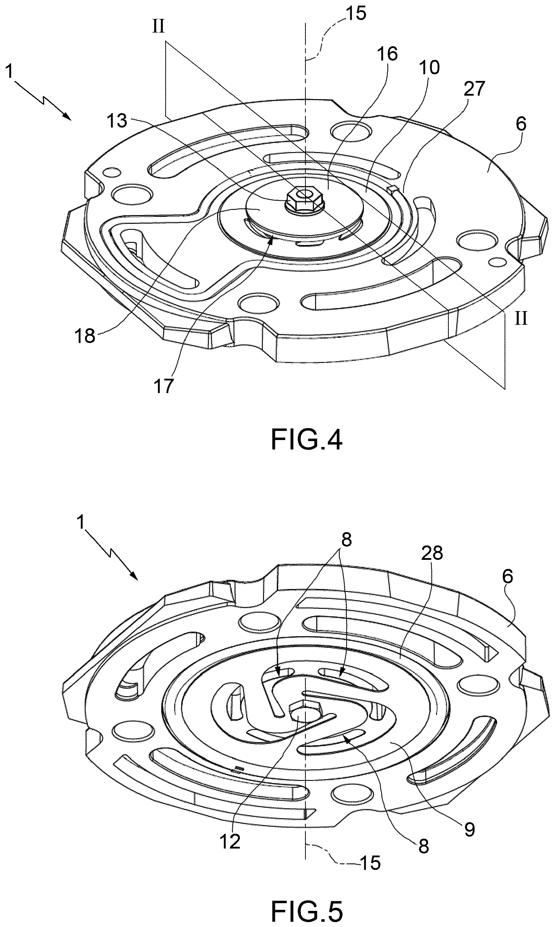

In addition, the abutment element 16 has a through seat 20 engageable with the connecting means 11, in order to allow the connection of the abutment element 16 to the valve assembly 1, in abutment against the delivery valve 10 (see figure 4). According to a preferred version, the through seat 20 is made centrally in the abutment element 16 in a manner such that the abutment element 16 and the at least one delivery valve 10, when they are engaged by the connecting means 11, are concentric with each other.

With regard to the shape of the abutment element 16, it is observed that the lower surface 19 has a plan area smaller than that of the upper surface 18, i.e. that the extension of the lower surface 19 is smaller than that of the upper surface 18. Therefore, the side surface 17 has asymmetric shape.

More in detail, the side surface 17 of the abutment element 16 comprises curvilinear sections in succession with each other, of which at least two have different curvature radii, mutually connected, to define a curvilinear continuous surface.

During use, the side surface 17 of the abutment element 16 acts as an abutment for the portion of the at least one delivery valve 10 that is free to be deformed. In such a manner, the side surface 17 of the abutment element 16 provides an abutment surface, wide and connected, along which the at least one delivery valve 10 can be abutted during the deformation thereof.

More in detail, the lower surface 19 of the abutment element 16 is placed in abutment against the delivery valve 10 and, therefore, prevents the movement thereof or the deformation during use. The remaining portion of the delivery valve 10, which is not affected by the lower surface 19, can instead be deformed.

The deformation of the delivery valve 10 is controlled by the shape of the side surface 17.

Therefore, depending on the profile of the side surface 17, it is possible to modify the configuration assumed by the delivery valve 10 during the deformation thereof.

It is also observed that the side surface 17 has a wide connector radius in proximity to the junction with the lower surface 19, in order to limit the stresses to which the delivery valve 10 is subjected during the deformation cycles.

For such purpose, it is considered that the presence, in such junction zone, of an edge could cause the formation of cracks in the delivery valve 10, thus compromising the operation, the lifetime as well as reliability of such component. In practice, from that stated above, the mutual engagement between the abutment element 16 and the delivery valve 10 is of progressive type and lacks discontinuities that could damage the delivery valve 10 itself.

In the valve assembly 1, the control of the deformation and of the travel of the delivery valve 10 allows limiting the level of sound pressure released in the compressed fluid exit phase through the at least one delivery opening, limiting the impact to which the valve itself is subjected during use.

In addition, the shape of the abutment element 16 allows limiting the travel of the delivery valve 10 in a manner so as to limit or cancel the resonance effect and the noise determined by the deformation of the valve as well as eliminate, during use, the more metallic sounds due to the same.

Such aspect is of particular importance with reference in particular to the use of a valve assembly according to the present invention in a compressor unit of dry type, lacking lubrication, which as is known has an operating noise greater than that of the solutions which provide for lubrication.

In addition, it is observed that the abutment element 16 thus shaped allows limiting the intensity of the high frequencies, hearable by the human ear, which are even more annoying.

As stated, the intake valve 9 and the delivery valve 10 are configured as circular elastic laminar bodies and each has shaped through openings adapted to identify the elastically yielding portions in order to facilitate and control the elastic deformation of the valves 9, 10.

With particular reference to the delivery valve 10, the same is configured in a manner such that its rigidity increases as a function of the amplitude of the deformation to which it is subjected.

For such purpose, the at least one delivery valve 10 has first through openings 21 with a mutual arrangement of central symmetry with respect to a central axis 22 of the at least one delivery valve 10.

During use, the central symmetry axis 22 is aligned and coincides with the central axis 15.

The first through openings 21 are shaped in a manner so as to delimit therebetween elastically yielding portions 23 of the at least one delivery valve 10. The at least one delivery valve 10 can also have second through openings 24, with a mutual arrangement of central symmetry with respect to the central axis 22 of the delivery valve 10.

The second through openings 24 are provided in positions alternated with the first through openings 21.

The second through openings 24, together with the first through openings 21, delimit connecting portions 25 between the elastically yielding portions 23 and the perimeter portion of the at least one delivery valve 10 which is set to occlude the at least one delivery opening 8.

The connecting portions 25 stiffen the delivery valve 10 in proximity to the perimeter portion thereof, preventing excessive deformations thereof. During the deformation of the delivery valve 10, in fact, the connecting portions 25 are susceptible of being placed in abutment at least partially against the side surface 17 of the abutment element 16, collaborating with the elastically yielding portions 23.

In the embodiment illustrated in the enclosed figures, the delivery valve 10 has three first through openings 21 alternated with three second through openings 24. It is intended that further versions comprising a higher or lower number of through openings 21, 24 are in any case comprised in the protective scope of the present invention.

According to a further version of the present invention, not illustrated in the enclosed figures, the valve assembly 1 can comprise a further abutment element in abutment against the intake valve 9 for the purpose of controlling the deformation thereof, analogous to that described above regarding abutment element 16.

A compression unit, indicated overall with 2 in figure 6, is another object of the present invention. With the expression compression unit, it is intended to indicate an assembly comprising at least one cylinder 3, at least one valve assembly 1 and at least one cap 5 which during use are mutually and sealingly connected (figure 6). It is observed that during use the valve assembly 6 is provided in a position interposed between the at least one cylinder 3 and the at least one cap 5.

For such purpose, it is observed that the valve assembly 1 comprises sealing means 26 adapted to provide a hermetic seal between the valve assembly 1 and the cylinder 3 and the cap 5.

More in detail, the sealing means 26 can comprise at least one gasket 27 provided in the upper portion of the valve assembly 1, adapted to determine a hermetic seal between the valve assembly 1 and the cap 5 and at least one further gasket 28, provided in the lower portion of the valve assembly 1, and adapted to determine a hermetic seal between the valve assembly 1 and the cylinder 3.

The compression unit 2 has at least one intake duct 29 adapted to be placed in selective fluid communication with the at least one intake opening 7 of the valve assembly 1, allowing the selective introduction of the working fluid, coming from outside, inside the cylinder 3, such that it can then be compressed.

Analogously, the compression unit 2 has at least one delivery duct 30 adapted to be selectively placed in communication with the at least one delivery opening 8 of the plate assembly 1 for the purpose of allowing the selective outflow of the compressed working fluid.

From that set forth above, it is clear that the valve assembly 1 according to the present invention is capable of attaining the pre-established objects.

The use of an abutment element 16 adapted to limit and control the deformation of the delivery valve 10 allows considerably reducing the noise level of the valve assembly 1 with respect to the solutions of known type.

For such purpose, it is observed that following several experimental tests in accordance with that prescribed by ISO 2151, by means of dry reciprocating compressors equipped with a valve assembly 1 according to the present invention, the measured noise was reduced by a value comprised between 2 and 12 decibels, according to a compensation curve A (or dBa), with respect to compressors of known type, of equal power.

In addition, it is observed that the best performances in terms of containment of the noise are attained without compromising the performances of a reciprocating compressor with regard to the flow rate of compressed air dispensable per unit of time through the valve assembly 1.

The above-described valve assembly 1 is susceptible of numerous modifications and variations within the protective scope of the following claims.

## Claims

1. Valve assembly for controlling the intake and delivery of a working fluid to be compressed in a compression unit, said valve assembly comprising:
a plate (6) provided with at least one intake opening (7), passing through said plate (6), and at least one delivery opening (8), passing through said plate (6), at least one laminar elastic intake valve (9), inferiorly associated to said plate (6), overlying said at least one intake opening (7), to close the same, capable of taking a deformed configuration, away from said plate (6), in which it delimits at least one passage opening for said working fluid to be compressed, at least one laminar elastic delivery valve (10), superiorly associated to said plate (6), overlying said at least one delivery opening (8), to close the same, capable of taking a deformed configuration, away from said plate (6), in which it delimits at least one passage opening for said compressed working fluid,
said at least one laminar elastic intake valve (9) and said at least one laminar elastic delivery valve (10) being circular,
connecting means (11) adapted to constrain said laminar elastic intake valve (9) and said laminar elastic delivery valve (10) to said plate (6),
said valve assembly comprising an abutment element (16), substantially disc-shaped, superiorly in abutment against at least one central portion of said at least one laminar delivery valve (10), and associated with said laminar delivery valve (10) through said connecting means (11), **characterized in that** said abutment element (16) is adapted to limit and control the elastic deformation of a remaining peripheral portion of said at least one laminar elastic delivery valve (10), guiding it through a curvilinear side surface (17), wherein said abutment element (16) has an upper surface (18) and a lower surface (19), substantially flat, mutually joined by said curvilinear side surface (17) wherein said side surface (17) is radiused to said lower surface (19).

2. Valve assembly according to claim 1, wherein the plan extension of said lower surface (19) of said abutment element (16) is smaller than that of said upper surface (18) of said abutment element (16), said side surface (17) being asymmetric.

3. Valve assembly according to claim 1, wherein said side surface (17) comprises curvilinear portions in succession to each other, among which at least two have different radii of curvature, to form a curvilinear and continuous surface.

4. Valve assembly according to any one of the preceding claims, wherein said abutment element (16) is associated in a concentric position to said at least one laminar elastic delivery valve (10).

5. Valve assembly according to claim 1, wherein said at least one laminar elastic delivery valve (10) has first through openings (21) with a mutual arrangement of central symmetry with respect to a central axis (22) of said laminar elastic delivery valve (10), said first through openings (21) being shaped so as to delimit therebetween first elastically yielding portions (23) of said at least one laminar elastic delivery valve (10).

6. Valve assembly according to the preceding claim, wherein said at least one laminar elastic delivery valve (10) has second through openings (24) with a mutual arrangement of central symmetry with respect to said central axis (22), said second through openings (24) being alternated with said first through openings (21) and delimiting together with said first through openings (21) connecting portions (25) between said elastically yielding portions (23) of said at least one laminar elastic delivery valve (10) and a peripheral portion of said laminar elastic delivery valve (10).

7. Valve assembly according to claim 6, wherein said connecting portions (25), in use, are susceptible of being placed in abutment against said side surface (17) of said abutment element (16), giving said delivery valve (10) a greater stiffness at the perimeter portion of said delivery valve (10) itself.

8. Valve assembly according to claim 5, wherein said first through openings (21) are at least three in number.

9. Compression unit (2) for a reciprocating type dry compressor, wherein said compression unit (2) comprises at least one cylinder (3) and at least one cap (5) for sealingly closing said cylinder (3), at least one intake duct (29) of a working fluid to be returned inside said cylinder (3), at least one delivery duct (30) of a compressed working fluid in selective fluid communication with said cylinder (3), **characterized in that** it comprises at least one valve assembly according to any one of claims 1 to 8 sealingly associated in interposed position between said at least one cylinder (3) and said at least one cap (5) for the selective control of the flow of a working fluid to be introduced in said cylinder (3) or to make come out from said cylinder (3).

10. Reciprocating lubrication-free type compressor, adapted to compress a working fluid, **characterized in that** it comprises at least one valve assembly according to any one of claims 1 to 8.

## Patentansprüche

1. Ventilbaugruppe zum Steuern des Einlassens und Zuführens eines zu verdichtenden Arbeitsfluids in eine Verdichtungseinheit, wobei die besagte Ventilbaugruppe umfasst:
eine Platte (6), versehen mit mindestens einer Einlassöffnung (7), die durch die besagte Platte (6) hindurchgeht, und mindestens einer Zuführöffnung (8), die durch die besagte Platte (6) hindurchgeht, mindestens einem laminaren elastischen Einlassventil (9), das der besagten Platte (6) von unten her zuordnet ist, sodass es die besagte mindestens eine Einlassöffnung (7) überdeckt, um dieselbe zu schließen, welches fähig ist, eine verformte Konfiguration, entfernt von der besagten Platte (6), einzunehmen, in der es mindestens eine Durchgangsöffnung für das besagte zu verdichtende Arbeitsfluid begrenzt, mindestens einem laminaren elastischen Zuführventil (10), das der besagten Platte (6) von oben her zuordnet ist, sodass es die besagte mindestens eine Zuführöffnung (8) überdeckt, um dieselbe zu schließen, welches fähig ist, eine verformte Konfiguration, entfernt von der besagten Platte (6), einzunehmen, in der es mindestens eine Durchgangsöffnung für das besagte zu verdichtende Arbeitsfluid begrenzt,
wobei das besagte mindestens eine laminare elastische Einlassventil (9) und das besagte mindestens eine laminare elastische Zuführventil (10) kreisförmig sind, Verbindungsmittel (11), die ausgelegt sind, um das besagte laminare elastische Einlassventil (9) und das besagte laminare elastische Zuführventil (10) an der besagten Platte (6) festzuhalten,
wobei die besagte Ventilbaugruppe ein Anschlagelement (16) umfasst, das im Wesentlichen scheibenförmig ist, das von oben her an mindestens einem zentralen Abschnitt des besagten mindestens einen laminaren Zuführventils (10) anliegt und dem besagten laminaren Zuführventil (10) durch die besagten Verbindungsmittel (11) zugeordnet ist, **dadurch gekennzeichnet, dass** das besagte Anschlagelement (16) ausgelegt ist, um die elastische Verformung eines verbleibenden Umfangsabschnitts des besagten mindestens einen laminaren elastischen Zuführventils (10) zu begrenzen und zu steuern, um es durch eine gekrümmte Seitenfläche (17) zu führen, worin das besagte Anschlagelement (16) eine obere Oberfläche (18) und eine untere Oberfläche (19), im Wesentlichen flach, aufweist, die durch die besagte gekrümmte Seitenfläche (17) miteinander verbunden sind, worin die besagte Seitenfläche (17) an der besagten unteren Oberfläche (19) gerundet ist.

2. Ventilbaugruppe nach Anspruch 1, worin die besagte ebene Ausdehnung der besagten unteren Oberfläche (19) des besagten Anschlagelements (16) kleiner ist als die der besagten oberen Oberfläche (18) des besagten Anschlagelements (16), wobei die Seitenfläche (17) asymmetrisch ist.

3. Ventilbaugruppe nach Anspruch 1, wobei die besagte Seitenfläche (17) nacheinander angeordnete gekrümmte Abschnitte umfasst, von denen mindestens zwei unterschiedliche Krümmungsradien aufweisen, um eine gekrümmte und kontinuierliche Oberfläche zu bilden.

4. Ventilbaugruppe nach irgendeinem der vorangegangenen Ansprüche, worin das besagte Anschlagelement (16) dem besagten mindestens einen laminaren elastischen Zuführventil (10) in einer konzentrischen Position zugeordnet ist.

5. Ventilbaugruppe nach Anspruch 1, worin das besagte mindestens eine laminare elastische Zuführventil (10) erste Durchgangsöffnungen (21) mit einer gegenseitigen Anordnung der zentralen Symmetrie in Bezug auf eine Mittelachse (22) des besagten laminaren elastischen Zuführventils (10) aufweist, wobei die besagten ersten Durchgangsöffnungen (21) so geformt sind, dass sie dazwischen erste elastisch nachgiebige Abschnitte (23) des besagten mindestens einen laminaren elastischen Zuführventils (10) begrenzen.

6. Ventilbaugruppe nach dem vorangegangenen Anspruch, worin das besagte mindestens eine laminare elastische Zuführventil (10) zweite Durchgangsöffnungen (24) mit einer gegenseitigen Anordnung der zentralen Symmetrie in Bezug auf eine Mittelachse (22) aufweist, wobei sich die besagten zweiten Durchgangsöffnungen (24) mit den besagten ersten Durchgangsöffnungen (21) abwechseln und zusammen mit den besagten ersten Durchgangsöffnungen (21) Verbindungsabschnitte (25) zwischen den besagten elastisch nachgiebigen Abschnitten (23) des besagten mindestens einen laminaren elastischen Zuführventils (10) und einem Umfangsabschnitt des besagten laminaren elastischen Zuführventils (10) begrenzen.

7. Ventilbaugruppe nach Anspruch 6, worin die besagten Verbindungsabschnitte (25) bei Verwendung fähig sind, an der Seitenfläche (17) des besagten Anschlagelements (16) anliegend angeordnet zu werden, wodurch dem besagten Zuführventil (10) eine größere Steifigkeit an dem Umfangsabschnitt des besagten Zuführventils (10) selbst verliehen wird.

8. Ventilbaugruppe nach Anspruch 5, worin die besagten ersten Durchgangsöffnungen (21) mindestens drei sind.

9. Verdichtungseinheit (2) für einen Trockenverdichter vom Hubkolbentyp, worin die besagte Verdichtungseinheit (2) mindestens einen Zylinder (3) und mindestens eine Kappe (5) zum dichten Verschließen des besagten Zylinders (3), mindestens einen Einlasskanal (29) eines Arbeitsfluids, das innerhalb des besagten Zylinders (3) zurückzuführen ist, mindestens einen Zuführkanal (30) eines verdichteten Arbeitsfluids in selektiver Fluidverbindung mit dem besagten Zylinder (3) umfasst, **dadurch gekennzeichnet, dass** sie mindestens eine Ventilbaugruppe nach irgendeinem der Ansprüche 1 bis 8 umfasst, die in zwischenliegender Position zwischen dem besagten mindestens einen Zylinder (3) und der besagten mindestens einen Kappe (5) zur selektiven Steuerung des Flusses eines Arbeitsfluids, das in den besagten Zylinder (3) eingeführt oder aus dem Zylinder (3) herausgeleitet werden soll, abdichtend angeordnet ist.

10. Kolbenverdichter des schmierungsfreien Typs, ausgelegt zum Verdichten eines Arbeitsfluids, **dadurch gekennzeichnet, dass** er mindestens eine Ventilbaugruppe nach irgendeinem der Ansprüche 1 bis 8 umfasst.

## Revendications

1. Ensemble clapet pour contrôler l'admission et la distribution d'un fluide de travail devant être comprimé dans une unité de compression, ledit ensemble clapet comprenant :
une plaque (6) dotée d'au moins une ouverture d'admission (7), traversant ladite plaque (6), et au moins une ouverture de distribution (8), traversant ladite plaque (6), au moins un clapet d'admission élastique laminaire (9), associé dans la partie inférieure à ladite plaque (6), surjacent de ladite au moins une ouverture d'admission (7), pour fermer celle-ci, capable de prendre une configuration déformée, éloignée de ladite plaque (6), dans laquelle elle délimite au moins une ouverture de passage pour ledit fluide de travail devant être comprimé, au moins un clapet de distribution élastique laminaire (10), associé dans la partie supérieure à ladite plaque (6), surjacent de ladite au moins une ouverture de distribution (8), pour fermer celle-ci, capable de prendre une configuration déformée, éloignée de ladite plaque (6), dans laquelle il délimite au moins une ouverture de passage pour ledit fluide de travail comprimé,
ledit au moins un clapet d'admission élastique laminaire (9) et ledit au moins un clapet de distribution élastique laminaire (10) étant circulaires,
des moyens de raccordement (11) adaptés pour maintenir ledit clapet d'admission élastique laminaire (9) et ledit clapet de distribution élastique laminaire (10) sur ladite plaque (6),
ledit ensemble clapet comprenant un élément de butée (16), sensiblement en forme de disque, en butée dans la partie supérieure contre au moins une partie centrale dudit au moins un clapet de distribution laminaire (10), et associé audit clapet de distribution laminaire (10) par l'intermédiaire desdits moyens de raccordement (11), **caractérisé en ce que** ledit élément de butée (16) est adapté pour limiter et contrôler la déformation élastique d'une partie périphérique restante dudit au moins un clapet de distribution élastique laminaire (10), la guidant à travers une surface latérale curviligne (17), dans lequel ledit élément de butée (16) comporte une surface supérieure (18) et une surface inférieure (19), sensiblement plates, jointes mutuellement par ladite surface latérale curviligne (17) dans laquelle ladite surface latérale (17) est arrondie sur ladite surface inférieure (19).

2. Ensemble clapet selon la revendication 1, dans lequel l'extension plane de ladite surface inférieure (19) dudit élément de butée (16) est plus petite que celle de ladite surface supérieure (18) dudit élément de butée (16), ladite surface latérale (17) étant asymétrique.

3. Ensemble clapet selon la revendication 1, dans lequel ladite surface latérale (17) comprend des parties curvilignes en succession l'une de l'autre, dont au moins deux ont des rayons de courbure différents, pour former une surface curviligne et continue.

4. Ensemble clapet selon l'une quelconque des revendications précédentes, dans lequel ledit élément de butée (16) est associé dans une position concentrique audit au moins un clapet de distribution élastique laminaire (10).

5. Ensemble clapet selon la revendication 1, dans lequel ledit au moins un clapet de distribution élastique laminaire (10) comporte des premières ouvertures traversantes (21) avec un agencement mutuel de symétrie centrale par rapport à un axe central (22) dudit clapet de distribution élastique laminaire (10), lesdites premières ouvertures traversantes (21) étant formées de façon à délimiter entre elles des premières parties élastiquement déformables (23) dudit au moins un clapet de distribution élastique laminaire (10).

6. Ensemble clapet selon la revendication précédente, dans lequel ledit au moins un clapet de distribution élastique laminaire (10) comporte des deuxièmes ouvertures traversantes (24) avec un agencement mutuel de symétrie centrale par rapport audit axe central (22), lesdites deuxièmes ouvertures traversantes (24) étant alternées avec lesdites premières ouvertures traversantes (21) et délimitant ensemble avec lesdites premières ouvertures traversantes (21) des parties de raccordement (25) entre lesdites parties élastiquement déformables (23) dudit au moins un clapet de distribution élastique laminaire (10) et une partie périphérique dudit clapet de distribution élastique laminaire (10).

7. Ensemble clapet selon la revendication 6, dans lequel lesdites parties de raccordement (25), pendant l'utilisation, sont susceptibles d'être placées en butée contre ladite surface latérale (17) dudit élément de butée (16), donnant audit clapet de distribution (10) une rigidité supérieure sur la partie périmétrique dudit clapet de distribution (10) lui-même.

8. Ensemble clapet selon la revendication 5, dans lequel lesdites premières ouvertures traversantes (21) sont au moins au nombre de trois.

9. Unité de compression (2) pour un compresseur à sec alternatif, dans laquelle ladite unité de compression (2) comprend au moins un vérin (3) et au moins un bouchon (5) pour fermer de manière étanche ledit vérin (3), au moins un conduit d'admission (29) d'un fluide de travail devant être renvoyé à l'intérieur dudit vérin (3), au moins un conduit de distribution (30) d'un fluide de travail comprimé en communication fluidique sélective avec ledit vérin (3), **caractérisée en ce qu'**elle comprend au moins un ensemble clapet selon l'une quelconque des revendications 1 à 8 associé de manière étanche en position intercalée entre ledit au moins un vérin (3) et ledit au moins un bouchon (5) pour le contrôle sélectif du débit d'un fluide de travail devant être introduit dans ledit vérin (3) ou pour le faire sortir dudit vérin (3).

10. Compresseur alternatif sans lubrification, adapté pour comprimer un fluide de travail, **caractérisé en ce qu'**il comprend au moins un ensemble clapet selon l'une quelconque des revendications 1 à 8.
